# EUROPÄISCHE PATENTANMELDUNG

(11) **EP 1 967 415 A1**
(43) Veröffentlichungstag der Anmeldung: **10.09.2008**
(21) Anmeldenummer: 08152144.5
(22) Anmeldetag: 29.02.2008
(51) Int. Cl.: B60P 3/04

(54) **Tiertransporteinrichtung**

(30) Priorität: 07.03.2007 DE 202007003531 U
(71) Anmelder: Böckmann Fahrzeugwerke GmbH, 49688 Lastrup (DE)
(72) Erfinder: Böckmann, Klaus, 49688 Lastrup (DE)
(74) Vertreter: Eisenführ, Speiser & Partner

(57) **Zusammenfassung**

Die Erfindung betrifft eine Tiertransporteinrichtung (1) mit wenigstens einer Öffnung (3). Erfindungsgemäß wird vorgeschlagen, dass der Öffnung (3) eine Rolloeinrichtung zugeordnet ist, mittels welcher die Bedeckung der Öffnung (3) ohne Umbau der Rolloeinrichtung wahlweise mit einer geschlossenen Plane oder mit einer offenporigen Netzstoffplane (4) ausführbar ist.

## Beschreibung

Die Erfindung betrifft eine Tiertransporteinrichtung, vorzugsweise einen Tiertransportanhänger oder -aufleger mit einem kastenförmigen Aufbau oder als Pritsche mit Spriegel.

Tiertransporteinrichtungen verschiedenster Art, sei es als ein- oder zweiachsige Hänger, die von einer Zugmaschine, z. B. von einem Kraftfahrzeug, bewegt werden, sind bekannter Stand der Technik.

Bekannt ist es auch, dass solche Tiertransporteinrichtungen Öffnungen aufweisen, um beispielsweise das Innere zu belüften oder auch natürliches Licht in das Innere fallen zu lassen. Schließlich ist auch bekannt, diese Öffnungen mit einer Beplanung abzudecken, wobei die Beplanung aus einer geschlossenen Plane (die ihrerseits unter Umständen wiederum Öffnungen aufweist) besteht oder die Öffnungsabdeckung durch ein Windschutznetz gebildet wird. Hierbei sei insbesondere auf den Stand der Technik gemäß DE 100 39 698, DE 198 22 806, DE 299 11 668, DE 130 774, US 4,454,837 sowie US 3,865,425 verwiesen.

Die in der DE 100 39 698 beschriebene Lösung ermöglicht eine Belüftung des Innenraumes, wobei eine solche Lösung insbesondere in der warmen Jahreszeit vorteilhaft ist, in der kalten Jahreszeit hingegen ist diese Lösung nicht immer einsetzbar, weil zu viele und zu kalte Luft in den Innenraum strömt und somit für die im Innenraum befindlichen Tiere nur suboptimal ist.

Aufgabe der vorliegenden Erfindung ist es, die bekannten Lösungen zu verbessern, um somit auch den Komfort für die Tiere in allen Jahreszeiten bestmöglich zu gestalten und gleichzeitig den Umrüstungsaufwand der Tiertransporteinrichtung möglichst gering zu halten.

Die Aufgabe wird erfindungsgemäß mit einem der Tiertransporteinrichtung mit den Merkmalen nach Anspruch 1 gelöst. Vorteilhafte Weiterbildungen sind in den Unteransprüchen beschrieben.

Bei der erfindungsgemäßen Tiertransporteinrichtung ist es möglich, wahlweise die Öffnung mit einer geschlossenen Plane als auch mit einer offenporigen Netzplane zu bedecken. Damit ist es möglich, dass im Sommer die Öffnung mit der offenporigen Netzplane bedeckt wird, im Winter hingegen mit der geschlossenen Plane und hierbei müssen keine komplizierten Umrüstungen vorgenommen werden, sondern es wird jeweils die Plane nach unten gezogen, die gerade erwünscht ist. Es ist ferner möglich, dass die geschlossene Plane die Öffnung nur zu einem Teil bedeckt, während die offenporige Netzplane den übrigen Teil der Öffnung verdeckt, so dass hiermit sowohl ein gewünschter Grad an Lichteinfall in den Innenraum als auch der Grad der Überdeckung beider Planen und somit der Grad der Durchtrittsfläche für die Luft in das Innere nochmals individuell nachgestellt werden kann.

Bei den Rollos handelt es sich bevorzugt um solche Rollos, die im ausgezogenen Zustand eine Rückstellkraft (Zugkraft) auf die Planen ausüben, also wenn die offenporige Netzstoffplane heruntergezogen wird, so wird stets auch eine Zugkraft nach oben hin ausgeübt, so dass durch die Fixierung der offenporigen Netzstoffplane mittels Laschen am ausklappbaren Heck eines Pferdeanhängers die offenporige Netzstoffplane stets gespannt ist. Gleiches gilt entsprechend dann, wenn die geschlossene Plane nach unten gezogen und an dem ausklappbaren Heck des Pferdeanhängers mittels Laschen, Ösen oder dgl. befestigt wird.

Die Erfindung ist anhand verschiedener Darstellungen und in verschiedenen Varianten gezeigt.

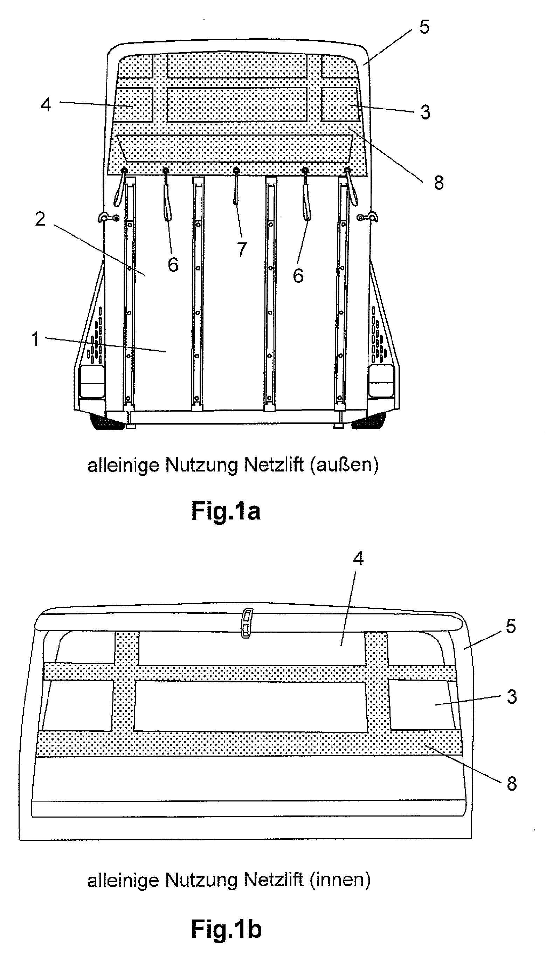

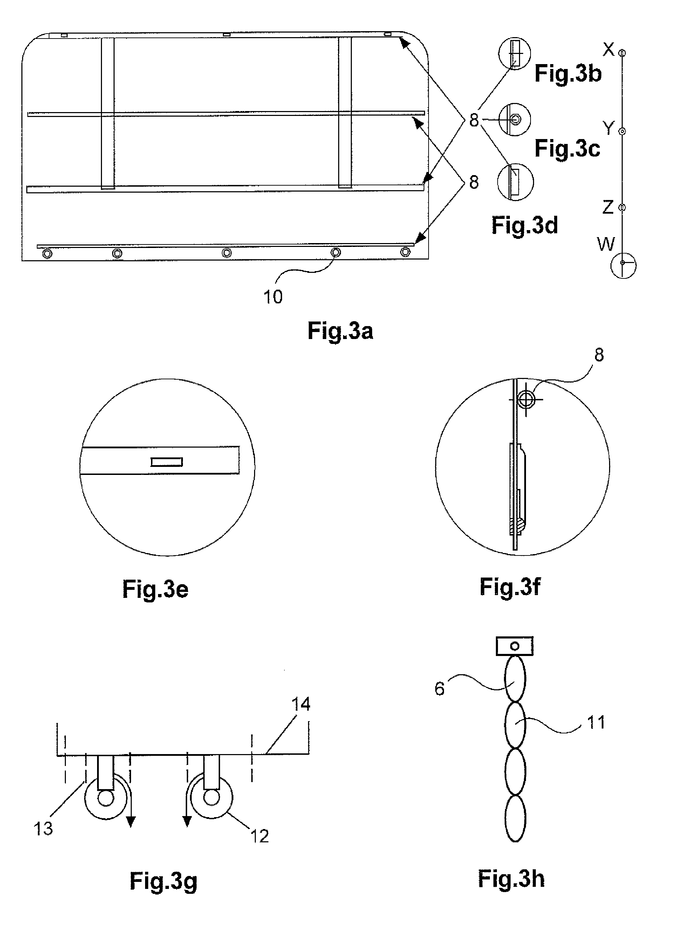

**Figur 1a** zeigt eine erfindungsgemäße Tiertransporteinrichtung **1,** im dargestellten Beispiel einen Pferdeanhänger von der Rückseite. Die Rückseite besteht im Wesentlichen aus einer herunterschwenkbaren Klappe **2** sowie einer darüber befindlichen Öffnung **3,** die im dargestellten Beispiel von einer offenporigen Netzplane **4** bedeckt ist. Die Netzplane wird ober- und unterseitig von einer Blende **5** eingefasst, wobei die Blende ihrerseits im Bedarfsfall auch eine nutartige Führung aufweisen kann, innerhalb derer die offenporige Netzplane beim Heruntergleiten bzw. Hochgleiten geführt wird. Die offenporige Netzplane **4** selbst wird von einer Rollostange **12** (**siehe** **Figur 3g**) aufgenommen, welche durch eine Feder, z. B. eine Blattfeder, stets bestrebt ist, die ausgezogene Netzplane aufzurollen. Ist die Netzplane, wie in der Figur gezeigt, durch Laschen **6** bzw. Ösen an entsprechenden Vorsprüngen **7** an der Heckklappe befestigt, so steht die gesamte Netzplane unter Spannung und ist somit möglichst eben gehalten.

In der **Figur 1a** sind mehrere horizontal ausgebildete Versteifungselemente **8** zu sehen, besser ist dies noch in **Figur 1b** **bzw.** **Figur 3** zu erkennen. Bei diesen horizontal verlaufenden Versteifungselementen handelt es sich insbesondere um mit dem offenporigen Netzstoffgewebe verbundene Rippen, die einerseits die Führung des gesamten Netzstoffgewebes an der Blende verbessern und andererseits eine zu starke Eindellung des gesamten Netzstoffgewebes verhindern, wenn während der Fahrt Luftverwirbelungen bzw. Luftturbulenzen von außen gegen das Netzstoffgewebe drücken.

Die horizontalen Versteifungen werden beim Zusammenrollen auf die Rollostange mit aufgerollt.

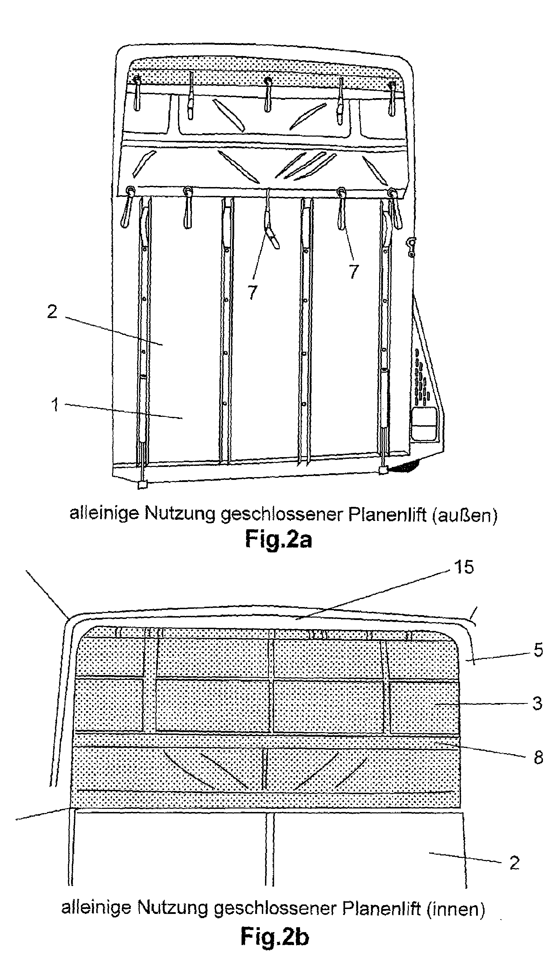

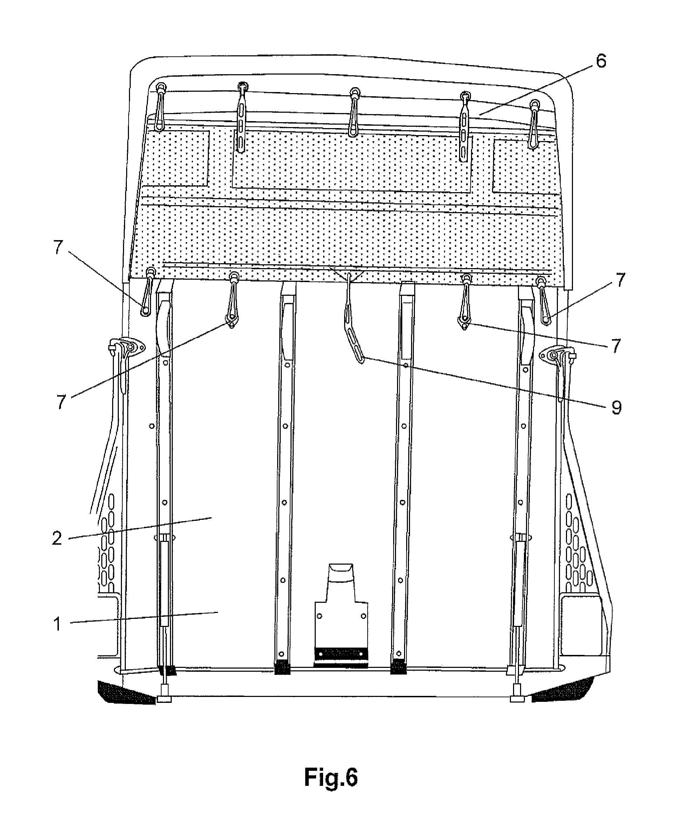

**Figur 2a** **wie auch** **Figur 6** zeigen den gleichen Anhänger, jedoch mit heruntergezogener geschlossener Netzplane, die wiederum Versteifungselemente aufweist wie das offenporige Netzgewebe nach Figur 1.

Wird die geschlossene Netzplane, die ihrerseits ebenfalls auf einer eigenen Rollostange angeordnet ist, heruntergezogen, so ist die gesamte Öffnung des Spriegels (so wird die Hecköffnung an einem Pferdeanhänger oberhalb der Heckklappe auch genannt) geschlossen und während der Fahrt kann dann praktisch kein Fahrtwind oder Turbulenzen des Fahrtwindes näher in den Innenraum des Pferdeanhängers eindringen.

Natürlich können auch beide Rollos, also sowohl das Rollo mit der geschlossenen Verplanung, als auch das mit dem offenporigen Netzgewebe, gleichzeitig teilweise wie auch vollständig heruntergezogen und an den Vorsprüngen **7** der Klappe **2** befestigt werden, um somit die gesamte Stabilität der Abdeckung zu vergrößern.

Die Rollos selbst sind mittels eines Metallflachprofils **13** (**siehe** **Figur 3g**) mit der Haubenkante des Anhängers verbunden, vorzugsweise verschraubt. Es ist sowohl möglich, dass die Rollos individuell mit der Haubenkante der Haube des Anhängers verbunden sind, als auch dass beide Rollos von einem gemeinsamen Träger **14 (****Figur 3g****)** gehalten werden, welcher seinerseits mit der Haubenkante des Anhängers verbunden ist, und um somit die gesamte Installation der beiden Rollos zu vereinfachen und deren Lage zueinander zu fixieren.

**Figur 3a** zeigt den strukturellen Aufbau einer Plane **4**, unabhängig davon, ob es sich um eine geschlossene Netzplane oder eine offenporige Netzstoffplane handelt. In der Figur ist zu erkennen, dass die Plane **3** vier horizontale Strebungen aufweist, die, wie auch die **Figuren 3b, 3c** **bzw. 3d** im Querschnitt zeigen, entweder nach Art eines Flachstabes ausgebildet sind, welcher seinerseits z. B. aus Hartkunststoff bestehen kann oder nach Art eines Rundstabes ausgebildet sind, welcher ebenfalls seinerseits aus Hartstoffkunststoff bestehen kann. Diese Versteifungen dieser Verstrebungen sind in das Planenmaterial eingearbeitet bzw. liegen innerhalb einer Tasche, die durch Anbringung von breiten Klebestreifen oder dgl. in dem Planenmaterial ausgebildet werden.

In **Figur 3a** sind dann ferner noch im untersten Bereich die Aufnahmen **10** zu erkennen, an welche elastische Laschen **6** (siehe **Figur 3h**) angebracht werden, z. B. aus Gummimaterial, mittels welcher dann die gesamte heruntergezogene Plane an Vorsprüngen, Haken oder dgl. am Heck **2** des Anhängers **1** befestigt und somit verspannt werden können.

**Figur 3h** zeigt den prinzipiellen Aufbau solcher Laschen **6**, die durchaus mehrere Öffnungen **11** aufweisen können, im dargestellten Beispiel vier, um somit eine individuelle Höhenpositionierung der jeweiligen Plane zu ermöglichen.

Wenn die Lasche vier untereinander liegende Ösen **11** wie in **Figur 3h** dargestellt aufweist, ist die Positionierung auf vier verschiedenen Höhen möglich und erlaubt somit verschiedene Einstellvarianten einer einzelnen Plane als auch gleichzeitig beider Planen zueinander.

Besonders bevorzugt ist es auch, wenn die beiden Rollos - siehe **Figur 3g** - gegeneinander laufend sind, d. h. dass beim Herunterziehen der geschlossenen Beplanung das betreffende (rechte) Rollo linksherum, während beim Herunterziehen der offenporigen Netzplane das betreffende (linke) Rollo genau andersherum verläuft, so dass beide Planenbahnen sehr eng zueinander liegend und zwischen den Rollostangen **12** angeordnet werden können, wie in **Figur 3g** beispielhaft dargestellt. Dort ist auch zu sehen, dass die jeweiligen Rollos von Halteprofilen **13** aufgenommen werden, welche ihrerseits an einem gemeinsamen Träger **14** befestigt sind, welcher dann unter der Haube **15** des Anhängers verschraubt oder auf andere Art und Weise angebracht werden kann.

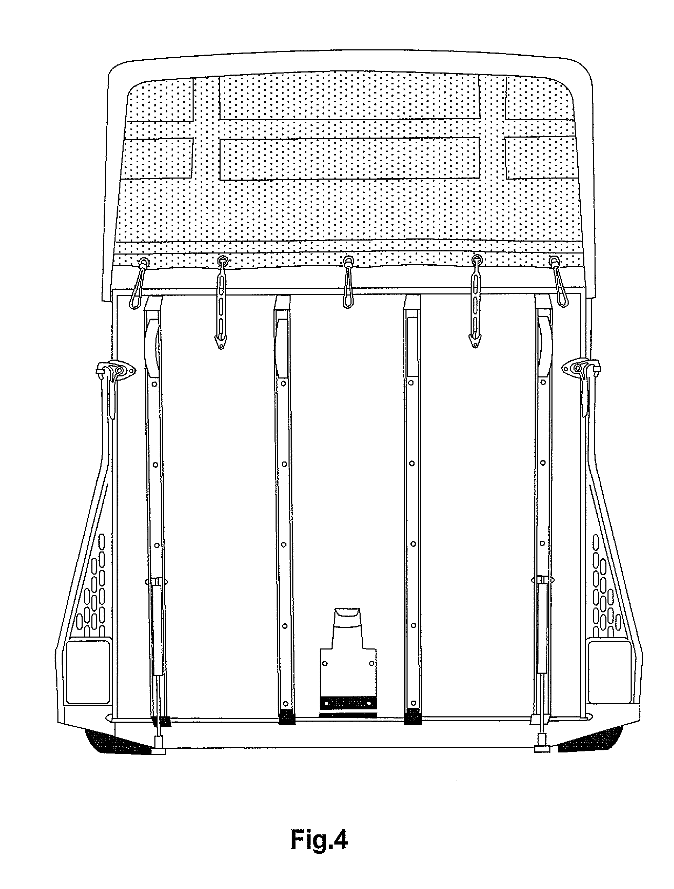

**Figur 4** zeigt eine Einstellung, bei der die offenporige Netzplane nur zu etwa 90 % heruntergezogen ist, so dass sich zwischen der Unterkante der Netzplane und der Oberkante der Heckklappe noch ein breiter Öffnungsspalt einstellt.

Auf die gleiche Art und Weise ist es auch möglich, die geschlossene Plane so zu fixieren, sei es alleine oder gleichzeitig mit der offenporigen Netzplane, wobei die Höheneinstellung individuell durch den Nutzer bestimmt werden kann.

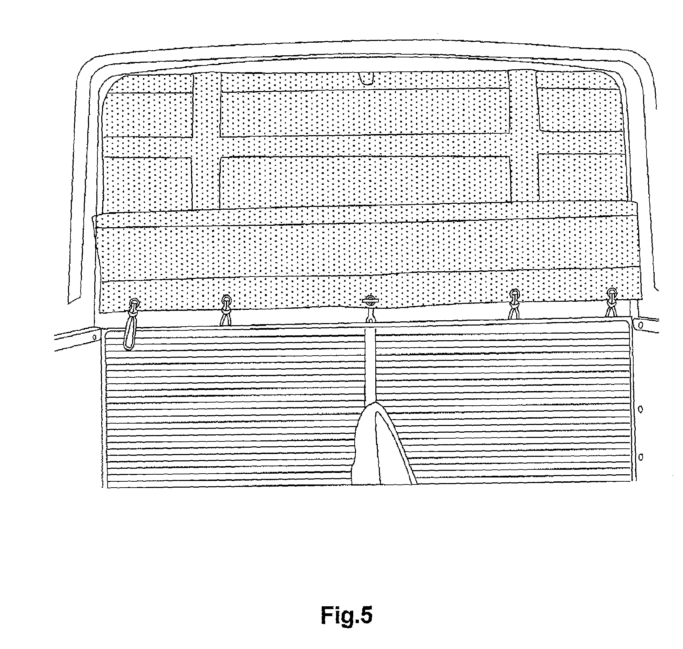

**Figur 5** zeigt ein Ausführungsbeispiel, bei dem die geschlossene Plane zu etwa 90 % heruntergezogen ist, während die offenporige Netzplane ganz heruntergezogen ist, so dass sich zwischen der Oberkante der Heckklappe und der Unterkante der geschlossenen Plane noch ein Spalt ergibt, der nur von der offenporigen Netzplane bedeckt ist, und somit sowohl einen Lichteinfall als auch eine Luftzirkulation ermöglicht.

Es ist auch durchaus sinnvoll, beide Planen gerade im Winter maximal, d. h. auf die unterste Stufe einzustellen, so dass beide Planen gleichzeitig die gesamte Öffnung bedecken, denn hierdurch wird die gesamte Stabilität der Bedeckung verbessert, weil die Versteifungen beider Planen zusammenwirken können.

Es ist auch möglich, an der Außenseite beider Planen fahnenartige Verwirbelungskörper, z. B. Schürzen, anzubringen. Solche fahnenartigen Verwirbelungskörper sind von Lastkraftwagen bekannt und haben den besonderen Vorteil, dass sie die an der Rückseite der Tiertransporteinrichtung einstellenden Verwirbelungen oder laminaren Strömungen so zu gestalten, dass der gesamte Luftwiderstand des Anhängers herabgesetzt ist und somit ein spritsparender Betrieb als zuvor möglich ist.

Schließlich ist es auch möglich, eine der beiden Planen oder im Bedarfsfall auch beide Planen mit einem Werbeaufdruck zu versehen, was regelmäßig deutlich günstiger ist als den gesamten Anhänger zu bedrucken.

Soweit in der vorliegenden Anmeldung eine geschlossene Plane beschrieben ist, so kann es sich hierbei bevorzugt um eine Plane aus PVC-Material handeln, wie z. B. von der Firma Sioen Industries erhältlich ist. Hierbei handelt es sich um ein Material, welches klassischerweise als LKW-Planen eingesetzt wird.

Soweit gemäß der vorliegenden Anmeldung von einer offenporigen Netzplane die Rede, so kann es sich hierbei typischerweise um ein Produkt der Firma HUESKER Synthetic GmbH & Co. Handeln. Dieses Material ist auch in dem DLG Prüfbericht 4882 ausführlich beschrieben. Das Material sollte jedoch wenigstens über eine Offenporigkeit von etwa 30 % oder mehr verfügen, weil ansonsten keine hinreichende Durchlüftung gegeben ist.

## Patentansprüche

1. Tiertransporteinrichtung, mit wenigstens einer Öffnung,
**dadurch gekennzeichnet, dass** der Öffnung eine Rolloeinrichtung zugeordnet ist, mittels welcher die Bedeckung der Öffnung ohne Umbau der Rolloeinrichtung wahlweise mit einer geschlossenen Plane oder mit einer offenporigen Netzstoffplane ausführbar ist.

2. Tiertransporteinrichtung nach Anspruch 1,
**dadurch gekennzeichnet, dass** der Tiertransporter ein Pferdeanhänger ist, an dessen Rückseite im oberen Bereich die Öffnung ausgebildet ist, und dass die Rolloeinrichtung aus zwei Rollos besteht, von denen das eine Rollo die geschlossene Plane und das andere Rollo die Netzstoffplane aufnimmt.

3. Tiertransporteinrichtung nach einem der vorherigen Ansprüche,
**dadurch gekennzeichnet, dass** sowohl die geschlossene Plane als auch die Netzstoffplane über eine Versteifungsstruktur verfügen.

4. Tiertransporteinrichtung nach einem der vorherigen Ansprüche,
**dadurch gekennzeichnet, dass** sowohl die geschlossene Netzplane als auch die Netzstoffplane über mehrere Laschen am unteren Rand verfügt, mittels derer die Planen herunterziehbar und an Vorsprüngen bzw. Haken der Tiertransporteinrichtung auf verschiedenen Höhenpositionen einstellbar sind.

5. Tiertransporteinrichtung nach einem der vorherigen Ansprüche,
**dadurch gekennzeichnet, dass** mit einer besonderen Stellung die Öffnung zu einem gewissen Prozentsatz, z. B. 50 % oder mehr, von der geschlossenen Plane bedeckbar ist und zu einem weiteren Prozentsatz, d. h. 70 - 100 %, von der Netzstoffplane bedeckbar ist.

6. Tiertransporteinrichtung nach einem der vorherigen Ansprüche,
**dadurch gekennzeichnet, dass** die Netzstoffplane aus einem Netzstoff besteht, der eine Offenporigkeit von ca. 10 % oder mehr, vorzugsweise etwa 30 % oder mehr, aufweist.

7. Tiertransporteinrichtung nach einem der vorherigen Ansprüche,
**dadurch gekennzeichnet, dass** die beiden Rollos mittels eines Aluminiumflachprofils mit dem Dach bzw. Haube der Tiertransporteinrichtung verschraubt sind.

8. Tiertransporteinrichtung nach einem der vorherigen Ansprüche,
**dadurch gekennzeichnet, dass** beide Planen - insbesondere zur Verhinderung des seitlichen Windeingriffs - im Seitenbereich von einer Blende der Transporteinrichtung überdeckt sind.

9. Tiertransporteinrichtung nach einem der vorherigen Ansprüche,
**dadurch gekennzeichnet, dass** die Rollos jeweils über wenigstens ein Federelement verfügen, welches bei Ausziehen der Plane stets eine Zugkraft auf die Plane ausübt, um die Plane wieder aufzurollen, und dass die beiden Rollos bevorzugt so angeordnet sind, dass beim Herunterziehen das eine Rollo linksläufig und das andere Rollo rechtsläufig ausgebildet ist und dabei die Planen der jeweiligen Rollos sehr dicht aneinander und zwischen den Rolloträgern liegen.

10. Tiertransporteinrichtung nach einem der vorherigen Ansprüche,
**dadurch gekennzeichnet, dass** wenigstens an der nach draußen gerichteten Seite einer Plane, vorzugsweise an der Außenseite beider Planen, ein oder mehrere fahnenartige Verwirbelungskörper (Fahnenspoiler), z. B. Verwirbelungsschürze, ausgebildet sind.
